# Europäisches Patentamt
## European Patent Office
### Office européen des brevets

(11) Numéro de publication: **0 165 169**
**B1**

(12) **FASCICULE DE BREVET EUROPEEN**

(45) Date de publication du fascicule du brevet: **08.08.90**

(21) Numéro de dépôt: **85401097.2**

(22) Date de dépôt: **04.06.85**

(51) Int. Cl.⁵: **G 01 S 3/78, F 41 G 7/30**

(54) Procédé de traitement d'une image video pour la poursuite d'un objet lumineux et la protection de cette poursuite à l'encontre de brouilleurs en forme d'autres objets lumineux.

(30) Priorité: **15.06.84 FR 8409389**

(43) Date de publication de la demande:
**18.12.85 Bulletin 85/51**

(45) Mention de la délivrance du brevet:
**08.08.90 Bulletin 90/32**

(84) Etats contractants désignés:
**DE FR GB IT**

(56) Documents cités:
**FR-A-2 389 865**

(73) Titulaire: **SOCIETE DE FABRICATION D'INSTRUMENTS DE MESURE (S.F.I.M.) 13, avenue Marcel Ramolfo-Garnier F-91301 Massy (FR)**

(72) Inventeur: **Roy, Jean-Claude 47, avenue de la Paix F-94260 Fresnes (FR)**
Inventeur: **Cerutti, Bernard 3, Allée du Grand Noyer F-91370 Verrieres-Le-Buisson (FR)**

(74) Mandataire: **Martin, Jean-Jacques et al Cabinet REGIMBEAU 26, Avenue Kléber F-75116 Paris (FR)**

Courier Press, Leamington Spa, England.

## Description

La présente invention concerne un procédé de traitement d'une image vidéo pour la poursuite d'un objet lumineux et la protection de cette poursuite à l'encontre de brouilleurs en forme d'autres objets lumineux.

Ce procédé est applicable à tous les systèmes d'écartométrie ou de conduite de tir dans lesquels on forme une image électronique du champ visé au moyen d'un capteur approprié délivrant un signal vidéo (par exemple un tube de télévision tel qu'un tube vidicon, ou un dispositif solide tel qu'un dispositif à transfert de charges).

Sur cette image apparaît le projectile tiré en direction de la cible visée. L'image du projectile sur l'écran est repérée, et le système de guidage effectue une poursuite automatique de celle-ci: l'"accrochage" ainsi réalisé permet de connaître en permanence la direction angulaire de progression du projectile, pour l'élaboration de signaux écartométriques et le téléguidage vers la cible.

De tels systèmes sont par exemple décrits dans le brevet FR-2 389 865, ou encore le brevet FR-2 441 145, qui envisagent d'ailleurs des systèmes de guidage simultané d'une pluralité de projectiles tirés vers une ou plusieurs cibles poursuivies et visualisées.

Il apparaît souhaitable de protéger la poursuite du ou des projectiles à l'encontre des brouillages éventuels mis en oeuvre par l'ennemi pour dévier le projectile de sa trajectoire. Le projectile apparaissant sur l'écran comme un objet lumineux (ou "lueur"), correspondant au rayonnement émis par le traceur du projectile, les contremesures consistent à éjecter, à proximité de la direction prise par le projectile, des leurres ou brouilleurs créant également une image lumineuse, résultant par exemple d'un rayonnement produit par des moyens pyrotechniques. Le but est de créer une confusion dans le système de poursuite entre l'objet lumineux correspondant au projectile et l'objet lumineux correspondant au brouilleur. Cette confusion amène à terme le système à s'"accrocher" sur un brouilleur et poursuivre celui-ci en abandonnant la poursuite de l'objet lumineux correspondant au projectile.

La probabilité de réussite du brouillage dépend du nombre des brouilleurs tirés, de leur intensité lumineuse (le système a généralement tendance à s'"accrocher" sur l'objet lumineux le plus brillant), et surtout de la précision du tir: la probabilité de succès du brouillage est en effet très grande si, sur l'image vidéo, la trajectoire du brouilleur croise celle du projectile: il viendra un moment où les deux images lumineuses seront confondues et, après disjonction (fin du croisement), le système n'aura plus aucun moyen de reconnaître lequel des deux objets lumineux correspond au brouilleur et lequel correspond au projectile. Si, comme indiqué, la luminosité du brouilleur est plus forte que celle du projectile (et les moyens pyrotechniques permettent aisément d'obtenir des sources de rayonnement intenses), le système s'"accrochera" très probablement sur le brouilleur. Tout retour à la poursuite du projectile devient alors impossible, si ce n'est par correction manuelle par un opérateur, rarement possible en raison de la brièveté du temps de vol du projectile.

L'invention propose de remédier à ces risques de brouillage, en protégeant la poursuite de l'objet lumineux correspondant au projectile à l'encontre d'autres objets lumineux constitués par les brouilleurs.

Par la suite, pour la clarté de l'exposé, on envisagera la protection d'un projectile unique à l'encontre d'un seul brouilleur. Mais le procédé s'applique, bien entendu, à la protection du projectile à l'encontre d'une pluralité de brouilleurs tirés simultanément, en multipliant les étapes correspondantes du procédé pour chacun des brouilleurs. De la même façon, le système peut suivre plusieurs projectiles simultanément, comme dans les systèmes proposés par les documents antérieurs précités. Enfin, la protection de la poursuite de l'objet lumineux peut s'appliquer à des objets lumineux autres que des projectiles, par exemples à une cible émettant ellemême un rayonnement, directement (réacteur d'avion) ou indirectement (utilisation d'un illuminateur laser).

A cet effet, le procédé selon l'invention comprend les étapes suivantes:

définir une fenêtre principale de traitement, centrée sur l'image de l'objet lumineux et déterminée par une portion de l'image vidéo qui contienne entièrement l'enveloppe de l'objet lumineux, les dimensions et la position de cette fenêtre étant redéfinies périodiquement de manière à s'adapter aux mouvements et aux variations de surface de l'objet lumineux sur l'image vidéo,

définir une couronne principale de détection, concentrique avec la fenêtre principale de traitement et entourant entièrement celle-ci, cette couronne principale de détection suivant les variations de dimensions et de position de la fenêtre principale de traitement,

détecter l'apparition d'un brouilleur dans la couronne principale de détection et, pour chaque brouilleur ainsi détecté:

définir une fenêtre secondaire de traitement centrée sur l'image du brouilleur et déterminée par une portion de l'image vidéo qui contienne entièrement l'enveloppe du brouilleur, les dimensions et la position de cette fenêtre étant redéfinies périodiquement de manière à s'adapter aux mouvements et aux variations de surface du brouilleur sur l'image vidéo,

définir une couronne secondaire de détection, concentrique avec la fenêtre secondaire de traitement et entourant entièrement celle-ci, cette couronne secondaire de détection suivant les variations de dimensions et de position de la fenêtre secondaire de traitement,

détecter la jonction des images de l'objet lumineux et du brouilleur et, à partir de cet instant:

mémoriser les paramètres balistiques et de surface de chacune des deux lueurs que constituent les images de l'objet lumineux et du brouilleur détecté,

geler l'une des deux lueurs, par suspension de la redéfinition périodique de la fenêtre de traitement correspondante,

détecter, dans la couronne de détection de la lueur non gelée, l'apparition de l'autre lueur, cette détection signalant la disjonction des deux lueurs,

analyser les paramètres balistiques et de surface de cette autre lueur,

reconnaître sa nature, objet lumineux ou brouilleur,

continuer ou reprendre la redéfinition périodique de la fenêtre principale de traitement.

Avantageusement, avant l'étape de reconnaissance de la nature de l'autre lueur, on effectue un test de cohérence consistant à:

calculer les paramètres balistiques et de surface prévisibles, à cet instant, pour cette lueur en fonction de ceux mémorisés initialement et du temps écoulé depuis cette étape de mémorisation,

comparer ces paramètres prévisibles avec ceux analysés,

en cas de concordance, effectuer l'étape de reconnaissance de la nature de la lueur,

en cas de non-concordance, réitérer le test de cohérence à un instant ultérieur.

En d'autres termes, on entoure la fenêtre de traitement, centrée sur le projectile, par une couronne de détection mobile avec la fenêtre de traitement. Dès qu'un objet lumineux quelconque apparaît dans cette couronne, on l'isole et on le suit, puis on "gèle" la poursuite dès que l'intersection des trajectoires commence à se produire, ce gel durant jusqu'à disjonction des deux images. Pour éviter de confondre le brouilleur et le projectile à la fin de la phase de gel, on prédit le point d'arrivée et la surface du brouilleur à la fin de l'intersection: ce test de cohérence permet de déterminer pratiquement à coup sûr la nature de chacune des deux lueurs (en effet, dans la pratique, les brouilleurs sont des objets non pilotés, simplement éjectés, dont la trajectoire suit des lois balistiques prévisibles, et notamment ne présente pas de changement de sens ou de point de rebroussement).

De préférence, en cas de non-concordance répétée pendant une durée dépassant une valeur limite, on affecte le caractère d'objet lumineux à la lueur non gelée. Cette situation correspond généralement à l'extinction du brouilleur pendant la phase de "gel" (les brouilleurs sont des dispositifs pyrotechniques, donc à durée de vie limitée). Il est alors souhaitable de lever l'ambiguïté pour pouvoir continuer normalement la poursuite.

De préférence également, simultanément à la continuation ou à la reprise de la redéfinition périodique de la fenêtre principale de traitement, on continue ou on reprend la redéfinition périodique de la fenêtre secondaire de traitement, jusqu'à ce que le brouilleur soit entièrement sorti de la couronne principale de détection. Le brouilleur est ainsi suivi même après la fin de l'intersection des trajectoires, ce qui augmente la sécurité du procédé: le brouilleur est "surveillé" jusqu'à ce qu'il se soit suffisamment éloigné du projectile.

De préférence également, celle des deux lueurs qui est gelée est celle ayant la surface la plus petite. Cette situation correspond au cas, le plus fréquent en pratique, des brouilleurs émettant un rayonnement de forte intensité, supérieure à celui du projectile.

D'autres caractéristiques et avantages de l'invention apparaîtront à la lecture de la description détaillée ci-dessous, faite en référence aux figures annexées, sur lesquelles:

la figure 1 est une vue schématique du capteur d'image et des circuits permettant de délivrer, numériser et mémoriser le signal vidéo,

les figures 2 à 7 illustrent les différentes étapes du procédé de l'invention.

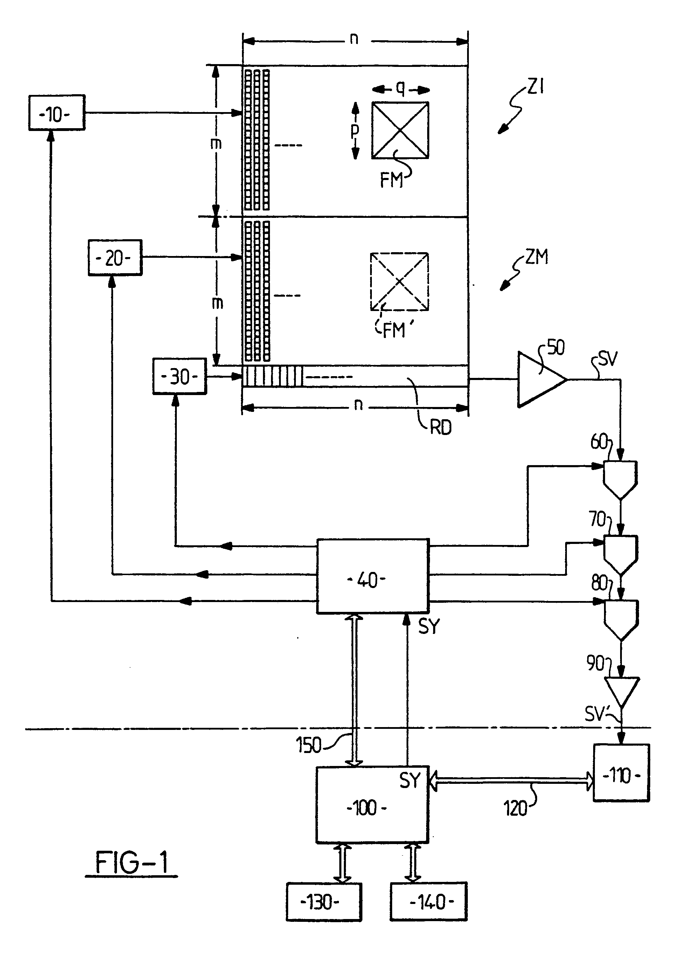

A titre d'exemple, on décrira une image formée au moyen d'un dispositif à transfert de charges du type à transfert de trames, tel que celui représenté figure 1 avec ses circuits associés.

Sur cette figure, le dispositif à transfert de charges comprend, classiquement, une zone image ZI, une zone mémoire ZM et un registre à décalage RD. La zone image ZI, qui est disposée dans le plan focal d'un dispositif dioptrique, transforme l'image lumineuse du champ visé en un ensemble de m x n charges lumineuses. Ces charges sont ensuite transférées dans la zone mémoire, qui est une matrice de m x n points mémoire, dont le contenu sera transféré ligne par ligne dans le registre à décalage RD, lu en série via l'amplificateur 50 pour délivrer le signal vidéo SV. Les circuits 10, 20, 30 permettent d'effectuer ces différents transferts de charges sous la commande d'un circuit de cadencement 40 synchronisé par le signal SY issu d'un microprocesseur 100.

Ce circuit de cadencement 40 commande également un étage échantillonneur bloqueur 60, qui lisse le signal vidéo en éliminant les portions comprises entre les différents pixels. Ensuite, un étage 70 ramène au niveau 0 Volt les points de référence de noir délivrés à chaque ligne, et l'étage suivant 80 met au niveau 0 Volt le signal vidéo pendant les périodes qui ne correspondent à aucune image. Enfin, un étage 90 effectue l'adaptation d'impédance et de niveau, pour transmettre le signal vidéo SV' ainsi traité vers les circuits d'analyse. Ces circuits comprennent un ensemble à microprocesseur 100 relié par une liaison série bidirectionnelle 120 à un convertisseur analogique-numérique 110 assurant la numérisation en temps réel du signal vidéo SV'. Le microprocesseur échange des données avec une mémoire vive 130 et une mémoire morte 140, ainsi qu'avec le circuit de cadencement 40 par la liaison 150. Plus précisément, le calculateur définit une fenêtre FM de dimensions réduites à l'intérieur de la zone image, et approximativement centrée sur la cible ou sur le projectile visé. La position de cette fenêtre est éventuellement redéfinie à chaque balayage de l'image (la référence FM' désigne la position homologue de cette fenêtre dans la zone mémoire ZM).

Les valeurs numérisées correspondant à chaque pixel de cette fenêtre sont mémorisées dans la mémoire vive 130. Par la suite, on entendra par "traitement de l'image vidéo" le traitement des valeurs numérisées correspondant seulement à cette fenêtre.

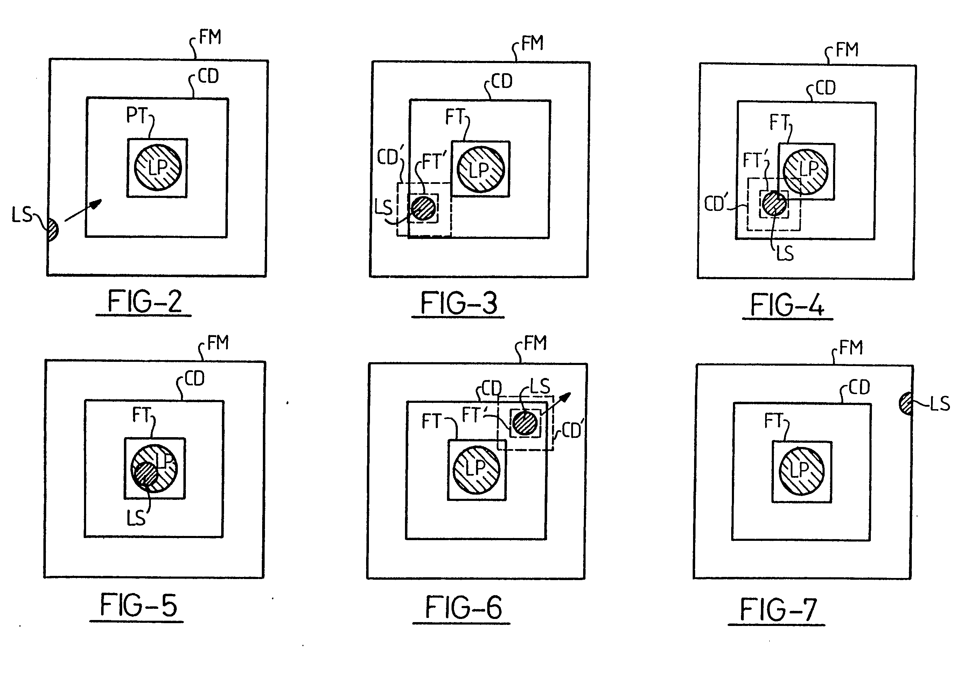

On va maintenant décrire les différentes étapes du procédé selon l'invention, en référence aux figures 2 à 7, qui représentent les évolutions des différents objets lumineux apparaissant à l'intérieur de la fenêtre mémorisée FM.

De façon générale, les objets lumineux (ou "lueurs") apparaissant dans l'image sont définis par leur enveloppe ou contour et par leur centre.

Les enveloppes sont déterminées par un niveau de seuil du signal vidéo. La valeur du seuil est périodiquement actualisée en fonction des valeurs moyennes respectives du signal vidéo pour l'ensemble de l'image, pour les régions au-dessus du seuil et pour les régions au-dessous du seuil. La lueur sera donc définie comme étant l'ensemble des pixels réunissant les points situés au-dessus du seuil.

Le centre de la lueur est défini comme étant le centre de contraste de l'image; ce centre de contraste est déterminé par un calcul de barycentre à partir des valeurs numérisées du signal vidéo de tous les pixels de la lueur correspondante. Le calcul de ce centre est donc indépendant des autres lueurs qui peuvent apparaître dans la fenêtre de mémorisation, si ce n'est indirectement par la modification de la valeur du seuil définissant le contour de la lueur.

L'arrivée du projectile dans le champ de l'image amène une brusque augmentation de la moyenne du signal vidéo et du nombre de points au-dessus du seuil. On vérifie alors, préventivement, que le centre de contraste de la lueur qui apparaît se trouve bien dans une région périphérique du champ (dans le cas contraire, il s'agirait nécessairement d'un brouilleur).

Si la lueur qui apparaît répond à cette condition, on va tout d'abord positionner la fenêtre de mémorisation dans la zone image pour que son centre coïncide avec le centre de contraste précédemment déterminé.

On va ensuite définir une fenêtre de traitement FT (figure 2) centrée sur cette lueur principale LP, et l'encadrant le plus étroitement possible (les dimensions et la position de la fenêtre de traitement FT sont autoadaptatives en fonction des déplacements et de la variation de surface de la lueur principale LP).

On entoure ensuite entièrement cette fenêtre de traitement FT par une couronne de détection CD, par exemple une couronne ayant une surface quadruple de celle de la fenêtre de traitement. La fenêtre de traitement et la couronne de détection sont concentriques et se déplacent donc en même temps que la lueur principale LP.

A chaque cycle de calcul, le contenu de la couronne de détection est analysé, afin de détecter l'arrivée de lueurs secondaires LS. La détection d'une telle lueur (figure 3) provoque l'assignation d'une fenêtre secondaire de traitement FT' et d'une couronne secondaire de détection CD' à cette nouvelle lueur, identiques aux fenêtres et couronnes utilisées pour la lueur principale. Ceci correspond au début d'une phase "alarme" correspondant à la détection et à la prise en charge de la lueur secondaire.

Le suivi de celle-ci est alors réalisé suivant la même méthode que pour la lueur principale, jusqu'à ce que les contours respectifs des deux lueurs viennent en contact (figure 4). Si plusieurs lueurs secondaires ont été prises en charge dans la couronne de détection, il s'agira alors du premier contact entre la lueur principale et une lueur secondaire.

Une phase de "gel" commence alors: on examine les surfaces respectives des deux lueurs, et on suspend le suivi de la plus petite.

Pendant la durée de cette phase de "gel" où les deux lueurs sont superposées (figure 5), on n'effectue plus la poursuite que d'une seule lueur (celle des deux qui est la plus grande: dans l'exemple représenté, il s'agit de la lueur principale).

La disjonction des deux lueurs (figure 6) est détectée par apparition d'une lueur dans la couronne de détection de la lueur non gelée.

Il y a lieu alors de vérifier qu'il s'agit bien d'une lueur secondaire (sinon, on devra intervertir les deux poursuites) et que, dans l'affirmative, il s'agit bien de la même lueur secondaire que celle qui avait été détectée avant la phase de "gel".

Pour cela, on effectue un test de cohérence sur la surface et la position de la lueur nouvellement détectée:

si cette lueur est bien la lueur attendue, on reprend la poursuite de la lueur principale (qui a été reconnue parmi les deux lueurs en question). La phase de "gel" est alors terminée,

dans le cas contraire, il s'agit d'une autre lueur secondaire; la phase de "gel" continue, et on affecte une nouvelle fenêtre de traitement et une nouvelle couronne de détection à cette nouvelle lueur (on notera que, dans le cas d'une pluralité de lueurs secondaires, il est prévu autant de phases de "gel", qui peuvent se chevaucher ou s'imbriquer que de lueurs secondaires).

Dans le cas où la phase de "gel" se termine, la lueur attendue et retrouvée dans la couronne de détection est suivie jusqu'à ce qu'elle sorte de celle-ci (figure 7). La phase "alarme" est alors terminée, et la fenêtre de traitement FT' et la couronne de détection CD' affectées à cette lueur secondaire sont alors libérées en mémoire.

**Revendications**

1. Procédé de traitement d'une image vidéo (FM) pour la poursuite d'un objet lumineux (LP) et la protection de cette poursuite à l'encontre de brouilleurs (LS) en forme d'autres objets lumineux, caractérisé en ce qu'il comprend les étapes suivantes:

définir une fenêtre principale de traitement (FT), centrée sur l'image de l'objet lumineux (LP) et déterminée par une portion de l'image vidéo qui contienne entièrement l'enveloppe de l'objet lumineux, les dimensions et la position de cette fenêtre étant redéfinies périodiquement de manière à s'adapter aux mouvements et aux variations de surface de l'objet lumineux sur l'image vidéo,

définir une couronne principale de détection (CD), concentrique avec la fenêtre principale de traitement et entourant entièrement celle-ci, cette couronne principale de détection suivant les variations de dimensions et de position de la fenêtre principale de traitement,

détecter l'apparition d'un brouilleur (LS) dans la couronne principale de détection et, pour chaque brouilleur ainsi détecté:

définir une fenêtre secondaire de traitement (FT') centrée sur l'image du brouilleur et déterminée par une portion de l'image vidéo qui contienne entièrement l'enveloppe du brouilleur, les dimensions et la position de cette fenêtre étant redéfinies périodiquement de manière à s'adapter aux mouvements et aux variations de surface du brouilleur sur l'image vidéo,

définir une couronne secondaire de détection (CD'), concentrique avec la fenêtre secondaire de traitement et entourant entièrement celle-ci, cette couronne secondaire de détection suivant les variations de dimensions et de position de la fenêtre secondaire de traitement,

détecter la jonction des images de l'objet lumineux et du brouilleur et, à partir de cet instant:

mémoriser les paramètres balistiques et de surface de chacune des deux lueurs que constituent les images de l'objet lumineux et du brouilleur détecté,

geler l'une des deux lueurs, par suspension de la redéfinition périodique de la fenêtre de traitement correspondante,

détecter, dans la couronne de détection de la lueur non gelée, l'apparition de l'autre lueur, cette détection signalant la disjonction des deux lueurs,

analyser les paramètres balistiques et de surface de cette autre lueur,

reconnaître sa nature, objet lumineux ou brouilleur,

continuer ou reprendre la redéfinition périodique de la fenêtre principale de traitement.

2. Procédé selon la revendication 1, caractérisé en ce qu'avant l'étage de reconnaissance de la nature de l'autre lueur, on effectue un test de cohérence consistant à:

calculer les paramètres balistiques et de surface prévisibles, à cet instant, pour cette lueur en fonction de ceux mémorisés initialement et du temps écoulé depuis cette étape de mémorisation,

comparer ces paramètres prévisibles avec ceux analysés,

en cas de concordance, effectuer l'étape de reconnaissance de la nature de la lueur,

en cas de non-concordance, réitérer le test de cohérence à un instant ultérieur.

3. Procédé selon la revendication 2, caractérisé en ce qu'en cas de non-concordance répétée pendant une durée dépassant une valeur limite, on affecte le caractère d'objet lumineux à la lueur non gelée.

4. Procédé selon la revendication 1, caractérisé en ce que, simultanément à la continuation ou à la reprise de la redéfinition périodique de la fenêtre principale de traitement, on continue ou on reprend la redéfinition périodique de la fenêtre secondaire de traitement, jusqu'à ce que le brouilleur soit entièrement sorti de la couronne principale de détection.

5. Procédé selon la revendication 1, caractérisé en ce que celle des deux lueurs qui est gelée est celle ayant la surface la plus petite.

6. Procédé selon la revendication 1, caractérisé en ce que les paramètres balistiques comprennent les valeurs instantanées de la position, de la direction de la vitesse et du module de la vitesse.

7. Procédé selon la revendication 1, caractérisé en ce que l'image est une image numérisée et l'enveloppe de l'objet lumineux ou du brouilleur sont définies par un niveau de seuil du signal vidéo.

8. Procédé selon la revendication 7, caractérisé en ce que la valeur du seuil est périodiquement actualisée en fonction des valeurs moyennes respectives du signal vidéo pour l'ensemble de l'image, pour les régions au-dessus du seuil et pour les régions au-dessous du seuil.

9. Procédé selon la revendication 7, caractérisé en ce que le centre de l'objet lumineux ou du brouilleur est déterminé par un calcul de barycentre à partir des valeurs numérisées du signal vidéo.

10. Procédé selon la revendication 1, caractérisé en ce que l'étape initiale de définition de la fenêtre principale de traitement n'est entreprise que si l'objet lumineux est apparu dans une région périphérique de l'image vidéo.

**Patentansprüche**

1. Bearbeitungsverfahren von Videobildsignalen (FM) für die Verfolgung eines leuchtenden Objekts (LP) und zum Schutz dieser Verfolgung gegen andere leuchtende Störobjekte, gekennzeichnet durch folgende Schritte:

Festlegen eines Hauptfensters (FT) für die Bearbeitung, welches um das Bild des leuchtenden Objekts (LP) zentriert und durch einen Teil des Videobildes bestimmt ist, der die äußere Form des leuchtenden Objekts vollkommen enthält, wobei die Abmessungen und die position dieses Fensters periodisch derart neu festgelegt werden, daß es sich an die Bewegungen und die Flächenveränderungen des leuchtenden Objekts auf dem Videobild anpaßt;

Festlegen eines Detektionshauptrahmens (CD), welcher konzentrisch zum Hauptfenster für die Bearbeitung angeordnet ist und dasselbe vollständig umgibt, wobei dieser Detektionshauptrahmen den Änderungen in den Abmessungen und der Position des Hauptfensters für die Bearbeitung folgt;

Detektieren des Erscheinens einer Störquelle (LS) im Detektionshauptrahmen und für jede so detektierte Störquelle:

Festlegen eines sekundären Bearbeitungsfensters (FT'), welches um das Bild der Störquelle zentriert und durch einen Teil des Videobildes bestimmt ist, der die äußere Form der Störquelle vollkommen enthält, wobei Abmessungen und Position dieses Fensters periodisch derart neu festgelegt werden, daß es sich an die Bewegungen und die Flächenveränderungen der Störquelle auf dem Videobild anpaßt,

Festlegen eines sekundären Detektionsrahmens (CD'), welcher konzentrisch zum sekundären Bearbeitungsfenster angeordnet ist und dasselbe vollständig umgibt, wobei dieser sekundäre Detektionsrahmen den Änderungen in den Abmessungen und der Position des sekundären Bearbeitungsfensters folgt,

Detektieren einer Berührung der Bilder des leuchtenden Objekts und der Störquelle und von diesem Moment an:

Abspeichern der ballistischen Parameter und der Fläche beider aus den Bildern des leuchtenden Objekts und der detektierten Störquelle bestehenden Leuchtflächen,

Einfrieren einer der beiden Leuchtflächen, indem die periodische Neufestlegung des zugehörigen Bearbeitungsfensters unterbrochen wird,

Detektieren des Erscheinens der anderen Leuchtfläche im Detektionsrahmen der nicht eingefrorenen Leuchtfläche, wobei diese Detektion die Trennung der beiden Leuchtflächen anzeigt,

Analysieren der ballistischen Parameter und der Fläche dieser anderen Leuchtfläche,

Wiedererkennen der Art der anderen Leuchtfläche, ob sie derjenigen des leuchtenden Objekts oder derjenigen der Störquelle entspricht,

Fortsetzen bzw. Wiederaufnehmen der periodischen Neufestlegung des Hauptfensters für die Verarbeitung.

2. Verfahren nach Anspruch 1, dadurch gekennzeichnet, daß vor dem Verfahrensschritt für die Wiedererkennung der Art der anderen Leuchtfläche ein Kohärenztest wie folgt durchgeführt wird:

Berechnen der ballistischen parameter und der voraussichtlichen Fläche für diese Leuchtfläche zu diesem Zeitpunkt als Funktion der ursprünglich abgespeicherten Werte und der seit dieser Abspeicherung verstrichenen Zeit,

Vergleichen dieser vorausberechneten Parameter mit denjenigen der Analyse,

Im Fall der Übereinstimmung Durchführen des Verfahrensschritts für die Wiedererkennung der Art der Leuchtfläche,

Im Fall fehlender Übereinstimmung Wiederholen des Kohärenztests zu einem späteren Zeitpunkt.

3. Verfahren nach Anspruch 2, dadurch gekennzeichnet, daß im Fall wiederholter fehlender Übereinstimmung während einer über einen Grenzwert hinausgehenden Zeitdauer das Charakteristikum des leuchtenden Objekts der nicht eingefrorenen Leuchtfläche zugeordnet wird.

4. Verfahren nach Anspruch 1, dadurch gekennzeichnet, daß gleichzeitig mit der Fortsetzung bzw. der Wiederaufnahme der periodischen Neufestlegung des Hauptfensters für die Bearbeitung die periodische Neufestlegung des sekundären Bearbeitungsfensters fortgesetzt bzw. wiederaufgenommen wird, bis sich die Störquelle gänzlich aus dem Detektionshauptrahmen herausbewegt hat.

5. Verfahren nach Anspruch 1, dadurch gekennzeichnet, daß die eingefrorene Leuchtfläche diejenige mit der kleinsten Fläche ist.

6. Verfahren nach Anspruch 1, dadurch gekennzeichnet, daß die ballistischen Parameter die Momentanwerte der Position, der Geschwindigkeitsrichtung und der Geschwindigkeitsänderung beinhalten.

7. Verfahren nach Anspruch 1, dadurch gekennzeichnet, daß das Bild ein digitalisiertes Bild ist und die äußere Form des leuchtenden Objekts bzw. der Störquelle durch einen Schwellwert des Videosignals bestimmt ist.

8. Verfahren nach Anspruch 7, dadurch gekennzeichnet, daß der Schwellwert periodisch in Abhängigkeit der jeweiligen Mittelwerte des Videosignals für das Gesamtbild, für die Gebiete oberhalb der Schwelle und für die Gebiete unterhalb der Schwelle aktualisiert wird.

9. Verfahren nach Anspruch 7, dadurch gekennzeichnet, daß das Zentrum des leuchtenden Objekts bzw. der Störquelle durch eine Berechnung des Schwerpunkts auf der Grundlage der digitalen Werte des Videosignals bestimmt wird.

10. Verfahren nach Anspruch 1, dadurch gekennzeichnet, daß der anfängliche Verfahrensschritt der Festlegung des Hauptfensters für die Verarbeitung nur durchgeführt wird, wenn das leuchtende Objekt in einem Gebiet am Rand des Videobildes erscheint.

## Claims

1. Process for processing a video image (FM) for tracking a luminous object (LP) and protecting this tracking against jammers (LS) in the form of other luminous objects, characterized in that it comprises the following steps:

defining a main processing window (FT) centred on the image of the luminous object (LP) and determined by a portion of the video image containing the entire frame of the luminous object, the dimensions and position of this window being redefined periodically so that it is adapted to the movements and surface variations of the luminous object on the video image,

defining a main detection border (CD) which is concentric with the main processing window and entirely surrounds the latter, this main detection border following the variations in dimensions and position of the main processing window,

detecting the appearance of a jammer (LS) in the main detection border and, for each jammer thus detected:

defining a secondary processing window (FT') centred on the image of the jammer and determined by a portion of the video image entirely containing the frame of the jammer, the dimensions and position of this window being redefined periodically so that they are adapted to the movements and surface variations of the jammer on the video image,

defining a secondary detection border (CD'), which is concentric with the secondary processing window and entirely surrounds the latter, this secondary detection border following the variations in dimensions and position of the secondary processing window,

detecting the meeting of the images of the luminous object and the jammer and, from this moment on:

storing the ballistic and surface parameters of each of the two bright objects which constitute the images of the luminous object and the detected jammer,

freezing one of the two bright objects by suspending the periodic redefinition of the corresponding processing window,

detecting in the detection border of the unfrozen bright object the appearance of the other bright object, this detection signalling the separation of the two bright objects,

analyzing the ballistic and surface parameters of this other bright object,

recognizing its nature as luminous object or jammer,

continuing or restarting the periodic redefinition of the main processing window.

2. Process according to Claim 1, characterized in that before the stage of recognizing the nature of the other bright object, there is carried out a consistency test comprising:

calculating the ballistic and surface parameters which may be predicted at that moment for this bright object as a function of those initially stored and the time elapsed since this storage step,

comparing these predictable parameters with those analyzed,

in case of agreement, carrying out the step of recognizing the nature of the bright object, in case of non-agreement, repeating the consistency test at a later moment.

3. Process according to Claim 2, characterized in that, in case of repeated non-agreement over a period exceeding a limit value, the unfrozen bright object is assumed to be identified as the luminous object.

4. Process according to Claim 1, characterized in that, simultaneously with continuation or restarting of the periodic redefinition of the main processing window, periodic redefinition of the secondary processing window is continued or restarted until the jammer has left the main detection border altogether.

5. Process according to Claim 1, characterized in that the frozen of the two bright objects is that having the smaller surface.

6. Process according to Claim 1, characterized in that the ballistic parameters comprise instantaneous values for position, direction of speed and modulus of speed.

7. Process according to Claim 1, characterized in that the image is a digitized image and the frame of the luminous object or the jammer are defined by a threshold level of the video signal.

8. Process according to Claim 7, characterized in that the value of the threshold is periodically updated as a function of the respective average values of the video signal for the image as a whole, for the regions above the threshold and for the regions below the threshold.

9. Process according to Claim 7, characterized in that the centre of the luminous object or the jammer is determined by calculating the centre of gravity from the digitized values of the video signal.

10. Process according to Claim 1, characterized in that the initial step of defining the main processing window is only undertaken if the luminous object has appeared in a peripheral region of the video image.

FIG-1

FIG-2

FIG-3

FIG-4

FIG-5

FIG-6

FIG-7

EP 0 165 169 B1